# EUROPÄISCHE PATENTANMELDUNG

(11) **EP 1 398 236 A1**
(43) Veröffentlichungstag der Anmeldung: **17.03.2004**
(21) Anmeldenummer: 03018655.5
(22) Anmeldetag: 21.08.2003
(51) Int. Cl.: B60T 17/00

(54) **Vorrichtung zum Verbinden zweier einander zugekehrter Flansche von Bauteilen**

(30) Priorität: 13.09.2002 DE 10242543
(71) Anmelder: Haldex Brake Products GmbH, 69123 Heidelberg (DE)
(72) Erfinder: Heer, Siegfried, 69168 Wiesloch (DE)
(74) Vertreter: Patentanwälte Rehberg + Hüppe

(57) **Zusammenfassung**

Bei einer Vorrichtung zum Verbinden zweier einander zugekehrter Flansche von Bauteilen (1, 2), insbesondere modular aufgebauter Bauteile, enden in den Oberflächen (5, 7) der Flansche (4, 6) abgedichtete Leitungen (13). Die Vorrichtung weist eine mechanische Spannvorrichtung für die Flansche (4, 6) auf. Zwischen den einander zugekehrten Oberflächen (5, 7) der Flansche (4, 6) ist mindestens eine Verteilungsplatte (3) vorgesehen, die zwei jeweils den Oberflächen (5, 7) der Flansche (4, 6) zugekehrte Oberflächen (29, 30) aufweist, wobei die Verteilungsplatte (3) von mindestens einer Bohrung (14) durchsetzt ist. Zwischen den Oberflächen (5, 7) der Flansche (4, 6) und den Oberflächen (29, 30) der Verteilungsplatte (3) sind Dichtungen (15) angeordnet.

## Beschreibung

Die Erfindung bezieht sich auf eine Vorrichtung zum Verbinden zweier einander zugekehrter Flansche von Bauteilen, insbesondere modular aufgebauter Bauteile, wobei in den Oberflächen der Flansche abgedichtete Leitungen enden, mit einer mechanischen Spannvorrichtung für die Flansche. Bauteile, insbesondere Gehäusebauteile, müssen oft miteinander verbunden werden. Dies gilt für das gesamte Gebiet der pneumatischen Steuerund Ventileinrichtungen, also beispielsweise an Druckluftaufbereitungsanlagen, Steuergeräten, Niveauregelventilen, Mehrkreisschutzventilen u. dgl.. Modular aufgebaute Bauteile besitzen oft ein würfelförmiges Gehäuse, von denen zumindest eine Oberfläche als Flansch ausgebildet ist, um den betreffenden Modul mit einem benachbarten Modul zusammenzuschrauben. Die dabei eingesetzte mechanische Spannvorrichtung weist in der Regel mehrere Spannschrauben auf. Beim Zusammenschrauben bzw. Zusammenfügen von mehreren Bauteilen über zwei je aneinander anliegende Flansche kommt es oft vor, dass in dem Flansch des einen Teils endende Leitungen über den anschließenden Flansch in das benachbarte Gehäuseteil verlängert bzw. mit dort endenden Leitungen verbunden werden müssen. Hierzu ist es bekannt, die Enden der Leitungen in entsprechender Zuordnung zueinander an den Flanschen enden zu lassen und Dichtungen einzufügen oder an der betreffenden Stelle anzuordnen, die über die mechanische Spannvorrichtung gespannt und damit in den gedichteten Zustand überführt werden.

### STAND DER TECHNIK

Eine Vorrichtung der eingangs beschriebenen Art ist aus der DE 198 34 701 A1 bekannt. Zwei modular aufgebaute Bauteile werden über zwei Flansche direkt miteinander verbunden. In jedem der beiden Flansche enden bzw. beginnen Leitungen, die über die Flansche aneinander anschließen, so dass sich die betreffenden Leitungen in beiden Bauteilen fortsetzen und dort zu Steuerelementen, beispielsweise Überströmventilen, Druck-Spannungswandlern, Regelventilen u. dgl. führen. Die Anordnung der Enden der Leitungen in den betreffenden Flanschen sind aufeinander abgestimmt, so dass auch dann, wenn ein modulares Bauteil durch ein etwas anders aufgebautes modulares Bauteil ersetzt werden soll, die gleichen Endpunkte der Leitungen in den Flanschen vorgesehen sein müssen, um den Anschluss herbeizuführen. Durch die festliegende Anordnung der Enden der Leitungen in den Flanschen ist es zusätzlich erforderlich, insbesondere bei sich verzweigenden und/oder kreuzenden Leitungen, zusätzliche Bohrungen in dem betreffenden Bauteil bzw. Gehäuseabschnitt vorzusehen. Da solche Bohrungen immer nur geradlinig eingebracht werden können, ist es erforderlich, beispielsweise zur Herstellung eingesetzte Bohrungen wieder zu verschließen und die Bohrungen so genau zu führen, dass aneinander anschließende Leitungsabschnitte entstehen. Dies bedeutet einen erheblichen Aufwand bei der Herstellung des Bauteils.

Aus der DE 197 15 528 A1 ist eine pneumatische Steuervorrichtung für Bremsanlagen von Schienenfahrzeugen bekannt, die mehrere Module aufweist. Die Module sind mit Mehrrohr-Strangpressprofilen über eine Trägerplatte verbunden, die ihrerseits aber auch von Längsbohrungen durchsetzt ist, die über später mit Stopfen wieder verschlossene Hilfsbohrungen zugänglich wird. Durch die eingebrachten Längsbohrungen ist die Trägerplatte gleichsam wiederum modular aufgebaut. Die Trägerplatte ist mehreren Steuergeräten zugeordnet und stellt die Leitungsverbindung zwischen den Mehrrohr-Strangpressprofilen und dem Gehäuse des Steuergerätes her. Als Dichtelemente dienen eingelegte O-Ringe.

Im Stand der Technik werden innerhalb der verschiedenen Gehäuseteile Bohrungen gefertigt, die Bestandteil der entsprechenden Leitungsverbindungen sind. Diese Bohrungen müssen, da sie immer von außen her angebracht werden, an verschiedenen Stellen mit Hilfsstopfen wieder verschlossen werden. Nachteilig daran ist, dass die entsprechenden Leitungen nur durch eine aufwändige mechanische Bearbeitung der einzelnen miteinander zu verbindenden Gehäuseteile herstellbar sind.

### AUFGABE DER ERFINDUNG

Der Erfindung liegt die Aufgabe zugrunde, eine Vorrichtung der eingangs beschriebenen Art bereitzustellen, die es ermöglicht, auf einen Großteil von in die Bauteile einzubringenden Bohrungen zu verzichten und trotzdem die Möglichkeit zu eröffnen, dass im Rahmen einer Flanschverbindung zwischen zwei Bauteilen, insbesondere Modulen, eine große Variationsbreite der Leitungsverbindungen erzielt werden können. Dies ist besonders dann sinnvoll, wenn ein Modul an einem Gesamtgerät aus mehreren Modulen durch einen anderen Modul mit abgeänderter Funktion ersetzt werden soll.

### LÖSUNG

Erfindungsgemäß wird dies bei einer Vorrichtung der eingangs beschriebenen Art dadurch erreicht, dass zwischen den einander zugekehrten Oberflächen der Flansche mindestens eine Verteilungsplatte vorgesehen ist, die zwei jeweils den Oberflächen der Flansche zugekehrte Oberflächen aufweist, in denen grabenartige Verbindungsleitungen angeordnet sein können, wobei die Verteilungsplatte von mindestens einer Bohrung durchsetzt ist, und dass zwischen den Oberflächen der Flansche und den Oberflächen der Verteilungsplatte Dichtungen angeordnet sind.

### BESCHREIBUNG DER ERFINDUNG

Die Erfindung geht von dem Gedanken aus, zwischen zwei einander zugekehrten Flanschen von Bauteilen zunächst einmal eine Verteilungsplatte anzuordnen, die an sich nicht erforderlich ist, wenn zwei Flansche direkt miteinander verbunden werden. Die dennoch durchgeführte Anordnung der Verteilungsplatte eröffnet jedoch vorteilhaft die Möglichkeit, die zwei Flansche variabel und abgestimmt auf die gewünschten Funktionen ausbilden zu können. Eine solche Verteilungsplatte ermöglicht es, im Bereich der beiden Oberflächen der Flansche grabenartige Verbindungsleitungen anzuordnen. Diese Verbindungsleitungen müssen nicht durch einen aufwändigen Bohrvorgang an einem Gehäuse erzeugt werden. Es ist möglich, diese grabenartigen Verbindungsleitungen bereits bei der Herstellung der Flansche bzw. der Bauteile mit einzubringen. Solche grabenartige Verbindungsleitungen lassen sich in den Flanschen der Bauteile und/oder in den Oberflächen der Verteilungsplatte anordnen. So lassen sich solche grabenartigen Vertiefungen beispielsweise beim Gießen oder Schmieden einer solchen Verteilungsplatte leicht mit einformen. Die Verteilungsplatte ist im Übrigen mindestens von einer Bohrung durchsetzt, die ihre beiden Hauptflächen, die den Oberflächen der Module zugekehrt sind, zu verbinden. Eine derart aufgebaute Verteilungsplatte eröffnet eine große Anzahl von Verbindungsleitungen. Auch sich kreuzende und/oder überbrückende Leitungen können relativ einfach realisiert und genutzt werden. Die Bohrungen gehen von einer Hauptfläche der Verteilungsplatte zu der anderen Oberfläche der Verteilungsplatte durch. Diese Bohrungen können sich in grabenartigen Vertiefungen fortsetzen, durch die zugleich eine Druckluftverteilung realisiert werden kann. Beispielsweise lassen sich auf diese Weise die Anströmung der Überströmventile von Mehrkreisschutzventilen im Rahmen einer Zentralbelüftung realisieren. Wenn ein Modul durch einen Modul mit anderer Funktion innerhalb des Gesamtgerätes ersetzt werden soll, so kann dies unter Beibehaltung der Verteilungsplatte oder auch durch Austausch der Verteilungsplatte realisiert werden, falls die betreffenden Leitungen dies erfordern. Es ist nicht mehr erforderlich, unterschiedliche Bauteile mit unterschiedlich geführten Leitungen herzustellen und miteinander mechanisch zu verbinden.

Für die erforderliche Abdichtung zwischen den Flanschen und den beiden Oberflächen der Verteilungsplatte ergeben sich verschiedene Realisierungsmöglichkeiten. So kann zwischen der Oberfläche der Verteilungsplatte und der zugehörigen Oberfläche der Flansche des Bauteils eine Dichtplatte aus elastischem Material vorgesehen sein, die Ausnehmungen für den Durchtritt von Druckluft aufweist. Eine solche Dichtplatte aus elastischem Material kann in einfacher Weise durch einen Stanzvorgang hergestellt werden, wobei die Anordnung der Durchbrechungen den entsprechenden Leitungsverbindungen entspricht.

Es ist aber auch möglich, dass mindestens eine Oberfläche der Verteilungsplatte mit einer durchbrochenen Beschichtung aus elastischem Material versehen ist.

Es ist aber auch möglich, dass die Verteilungsplatte von mehreren Bohrungen durchsetzt ist, die zur Realisierung einer Leitung vorgesehen sind. Damit wird gleichsam die Möglichkeit eröffnet, die in einem Flansch endende Leitung mit einer anderen in demselben Flansch endenden Leitung zu verbinden, ohne dass ein Anschluss an Leitungen in dem anderen Flansch erfolgt.

In mindestens einer der Oberflächen der Flansche können ebenfalls grabenartige Verbindungsleitungen vorgesehen sein, um das Ende der Leitungen relativ zu der Verteilungsplatte an eine andere Stelle zu legen. Auch diese grabenartigen Verbindungsleitungen lassen sich vergleichsweise einfach herstellen.

In allen Fällen kann der Querschnitt der grabenartigen Verbindungsleitungen an die durchzuführende Luftmenge angepasst sein. Die grabenartigen Verbindungsleitungen können also unterschiedlich tief ausgebildet sein und auch einen unterschiedlichen Querschnitt zur Verfügung stellen. Wenn große Luftmengen durch die Leitungen fließen müssen, werden die grabenartigen Verbindungsleitungen relativ tief gestaltet bzw. mit einem entsprechend großen Querschnitt versehen. Für die Verbindung von Steuerleitungen können vorteilhaft kleinere und weniger tief ausgebildete grabenartige Verbindungsleitungen vorgesehen sein.

Es ist auch möglich, dass eine Bohrung durch die Verteilungsplatte in mehreren grabenartigen Verbindungsleitungen endet und/oder beginnt, um auf diese Weise eine Verteilung der Druckluft zu realisieren.

Eine weitere Möglichkeit ergibt sich damit, dass eine in der Oberfläche des Flansches des einen Bauteils endende Leitung über zwei die Verteilungsplatte durchsetzende Bohrungen rückgeführt ist. Dadurch wird eine Längsbohrung in dem einen Bauteil ersetzt bzw. überflüssig.

### KURZBESCHREIBUNG DER FIGUREN

Die Erfindung wird anhand bevorzugter Ausführungsbeispiele weiter erläutert und beschrieben.
- **Fig. 1**: zeigt einen Vertikalschnitt durch eine Druckluftbeschaffungseinrichtung mit einem modular aufgebauten Lufttrockner und einer modular aufgebauten Druckregeleinrichtung.
- **Fig. 2**: zeigt einen Schnitt durch eine Verteilungsplatte in einer zweiten Ausführungsform gemäß der Linie II-II in Fig. 3.
- **Fig. 3**: zeigt eine Draufsicht auf die Verteilungsplatte gemäß Fig. 2.
- **Fig. 4**: zeigt eine schematische Darstellung einer Druckluftaufbereitungseinrichtung mit mehrfacher Anwendung der Verteilungsplatte.

### FIGURENBESCHREIBUNG

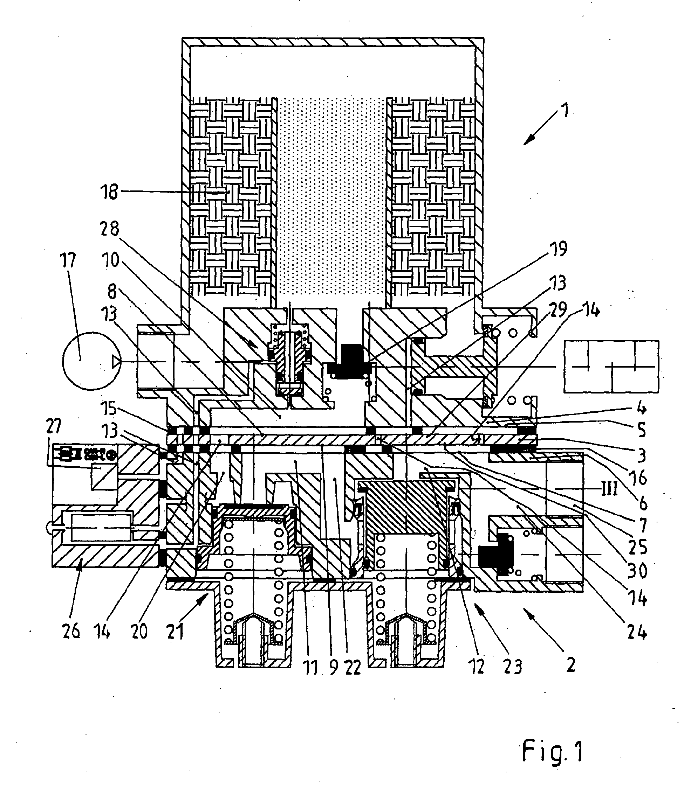

Fig. 1 zeigt in seinem oberen Teil ein erstes Bauteil 1, welches modular aufgebaut ist und im Wesentlichen als Trockner und Druckregler fungiert. Im unteren Bereich von Fig. 1 ist ein zweites Bauteil 2 dargestellt, welches ebenfalls modular aufgebaut ist und Steuerelemente eines Mehrkreisschutzventils aufnimmt. Zwischen den Bauteilen 1 und 2 ist eine Verteilungsplatte 3 angeordnet, die als vergleichsweise dünne Platte mit zwei ausgedehnten Haupt- bzw. Oberflächen ausgebildet ist.

Das gehäuseartig ausgebildete Bauteil 1 weist einen Flansch 4 mit einer ebenen Oberfläche 5 auf. In ähnlicher Weise besitzt das Bauteil 2, dem Bauteil 1 zugekehrt, einen Flansch 6 mit Oberfläche 7. Entsprechend der Ausbildung und Ausdehnung der Oberflächen 5, 7 besitzt die Verteilungsplatte 3 zugeordnete Oberflächen 8 und 9.

In der Oberfläche 5 des Flansches 4 des Bauteils 1 ist eine grabenartige Verbindungsleitung 10 untergebracht, die einen relativ großen Querschnitt besitzt und sich parallel zu der Oberfläche 5 des Flansches 4 in einer bestimmten Richtung erstreckt. Eine solche grabenartige Verbindungsleitung 10 mit relativ großem Querschnitt ist dann erforderlich, wenn große Luftmengen von dem Bauteil 1 in das Bauteil 2 übergeleitet werden sollen, wie es bei der Anströmung von Überströmventilen erforderlich ist. In analoger Weise sind in der Oberfläche 7 des Flansches 6 des Bauteils 2 ebenfalls grabenartige Verbindungsleitungen 11, 12 vorgesehen, die auch hier relativ großquerschnittig ausgebildet sind. In den Oberflächen 5 und 7 der beiden Flansche 4 und 6 enden ansonsten verschiedene Leitungen 13, die entweder als Steuerleitungen dienen und insoweit nur von einer geringen Luftmenge durchströmt werden müssen. Die Verbindungsplatte 3 ist an den dargestellten Stellen von Bohrungen 14 durchsetzt. Die Bohrungen 14 erstrecken sich senkrecht zu der Hauptausdehnung der Verteilungsplatte 3 und sind mit verschiedenen Durchmessern auf die erforderlichen Querschnitte abgestimmt. Es ist hier erkennbar, dass die Verteilungsplatte 3 nur solche Bohrungen 14 aufweist. Die grabenartigen Verbindungsleitungen 10, 11, 12 sind hier in den Oberflächen 5 und 7 der Bauteile 1 und 2 untergebracht. Zu Zwecken der Abdichtung sind zwischen der Oberfläche 5 des Flansches 4 des Bauteils 1 und der Verteilungsplatte 3 Dichtungen 15 vorgesehen. Die Dichtungen 15 können als einzelne Dichtungen, O-Ringe oder aber auch in Form einer durchgehenden Dichtungsplatte vorgesehen sein. Entsprechendes gilt für weitere Dichtungen 16 zwischen der Verteilungsplatte 3 und der Oberfläche 7 des Flansches 6 des Bauteils 2.

Für den Fachmann ist erkennbar, dass das Bauteil 1 als Trockner und Druckregler fungiert. Die Druckluft wird von einem Kompressor 17 herangeführt und durchströmt zunächst eine Trocknungspatrone 18, von wo sie zu einem Rückschlagventil 19 gelangt. Die Druckluft gelangt weiterhin in die grabenartige Verbindungsleitung 10 und durch eine Bohrung 14 in der Verteilungsplatte hindurch zu einer Leitung 20, die zu dem Ventilkörper eines Überströmventils 21 führt. Das Überströmventil 21 mit begrenzter Rückströmung besitzt einen Öffnungs- und einen Schließdruck. Eine Verbindungsleitung 22 führt zu einem Druckbegrenzungsventil 23. Bestandteil der Leitung 22 ist wiederum eine grabenartige Vertiefung 11 in der Oberfläche 7 des Flansches 6. Vom Druckbegrenzungsventil 23 führt eine Leitung 24 zu einem Anschluss 25, von dem eine Leitung ausgeht, über die der Kreis III einer Druckluftbeschaffungseinrichtung befüllt wird. Es versteht sich, dass innerhalb des Bauteils 2 auch entsprechende Überströmventile 21 für die anderen Kreise, beispielsweise die Kreise I, II und IV, angeordnet sind. Die Ausbildung im Einzelnen ist in Fig. 1 nicht erkennbar, da in diesem Schnitt das Überströmventil 21 und das Druckbegrenzungsventil 23 des Kreises III dargestellt sind. Auf die Ausbildung und Anordnung der singulären Ventileinheiten innerhalb des Bauteils 2 kommt es im Rahmen der vorliegenden Erfindung nicht an. Seitlich an dem Bauteil 2 ist noch ein Magnetventil 26 angeflanscht, in dessen Gehäuse ein Druck-Spannungswandler 27 untergebracht ist. Dieser Druck-Spannungswandler 27 erzeugt ein Signal, welches dem ausgangsseitigen Druck zum Kreis III, also in der Leitung 24 entspricht. Dieser Druck der Leitung 24 wird durch die am weitesten rechts eingezeichnete Bohrung 14 gleichsam auf die Oberseite der Verteilungsplatte 3 geleitet und gelangt dann um die übrigen Leitungsverbindungen herum bis nach ganz links, um dort über die am weitesten links dargestellte Bohrung 14 wiederum auf die andere Seite der Verteilungsplatte 3 zu gelangen und dem Druck-Spannungswandler 27 zugeführt zu werden. Es ist weiterhin erkennbar, wie über das Magnetventil 26 ein im Bauteil 1 integriertes Regenerationsventil 28 angesteuert wird. Die Verteilungsplatte 3 gemäß Fig. 1 weist zwei ebene Oberflächen 29 und 30 auf, die hier als ebene durchgehende Oberflächen ausgebildet sind, also ohne grabenartige Vertiefungen.

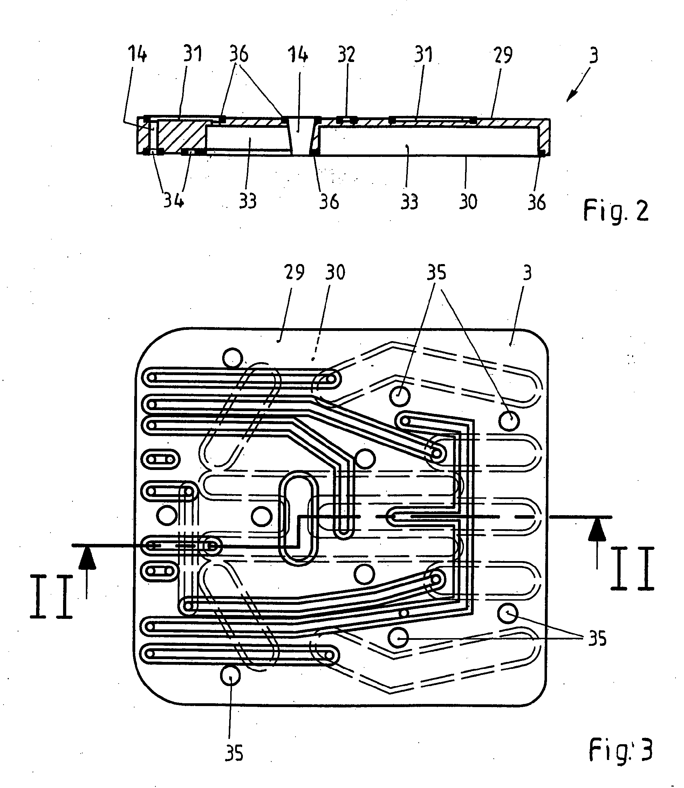

In **Fig. 2 und 3** ist eine weitere Ausführungsform der Verteilungsplatte 3 im Einzelnen dargestellt. Auch hier handelt es sich bei der Verteilungsplatte 3 um eine vergleichsweise flache z. B. rechteckig oder quadratisch ausgebildete Platte mit den beiden Oberflächen 29 und 30. In der Oberfläche 29 sind zwei grabenartige Verbindungsleitungen 31 vorgesehen, die sich in Richtung der Zeichenebene der Fig. 2 erstrecken. Eine weitere grabenartige Verbindungsleitung 32 erstreckt sich senkrecht dazu. Auf der Unterseite, also in der Oberfläche 30 der Verteilungsplatte 3, sind zwei großquerschnittige grabenartige Verbindungsleitungen 33 vorgesehen, von denen eine an eine Bohrung 14 angeschlossen ist. In der Oberfläche 30 können weitere grabenartige Verbindungsleitungen 34 vorgesehen sein. Die Ausbildung und Anordnung der verschiedenen grabenartigen Verbindungsleitungen 31, 32, 33, 34 richten sich nach den gegebenen Verhältnissen und nach den Leitungsenden in den Bauteilen 1 und 2, die über die Verteilungsplatte 3 miteinander zu verbinden sind. Fig. 3 zeigt ein mögliches Ausführungsbeispiel, wobei die grabenartigen Verbindungsleitungen 31 und 32 auf der Oberfläche 29 in durchgezogener Linienführung angegeben sind, während die im Bereich der unteren Oberfläche 30 eingebrachten Verbindungsleitungen 33 und 34 gestrichelt dargestellt sind. Es ist eine Vielzahl von Bohrungen 14 verwirklicht, die jeweils von oben nach unten durchgehend vorgesehen sind. Weiterhin sind Löcher 35 erkennbar, die für den Durchtritt von Spannschrauben oder anderen Spannmitteln vorgesehen sind, um die Bauteile 1 und 2 sowie die dazwischen angeordnete Verteilungsplatte 3 dauerhaft miteinander zu verbinden.

Während **Fig. 1** ein Ausführungsbeispiel zeigt, bei dem die grabenartigen Verbindungsleitungen 10, 11 und 12 nur im Bereich der anschließenden Flansche 4 und 6 der Bauteile 1 und 2 vorgesehen sind, zeigt das Ausführungsbeispiel der **Fig. 2 und 3** die Anordnung der grabenartigen Verbindungsleitungen 31, 32, 33 und 34 an der Verteilungsplatte 3. Beide Möglichkeiten können natürlich auch miteinander kombiniert werden.

Für die Ausbildung der Dichtungen 15 ergeben sich ebenfalls verschiedene Möglichkeiten. Die Dichtungen 15 können als dazwischen gelegte Dichtungsplatten aus elastischem Material ausgebildet sein, die entsprechende Durchbrechungen aufweisen. Es ist aber auch möglich, z. B. die Verteilungsplatte 3 mit aufvulkanisierten Dichtungen 36 zu versehen, wie dies **Fig. 2** erkennen lässt.

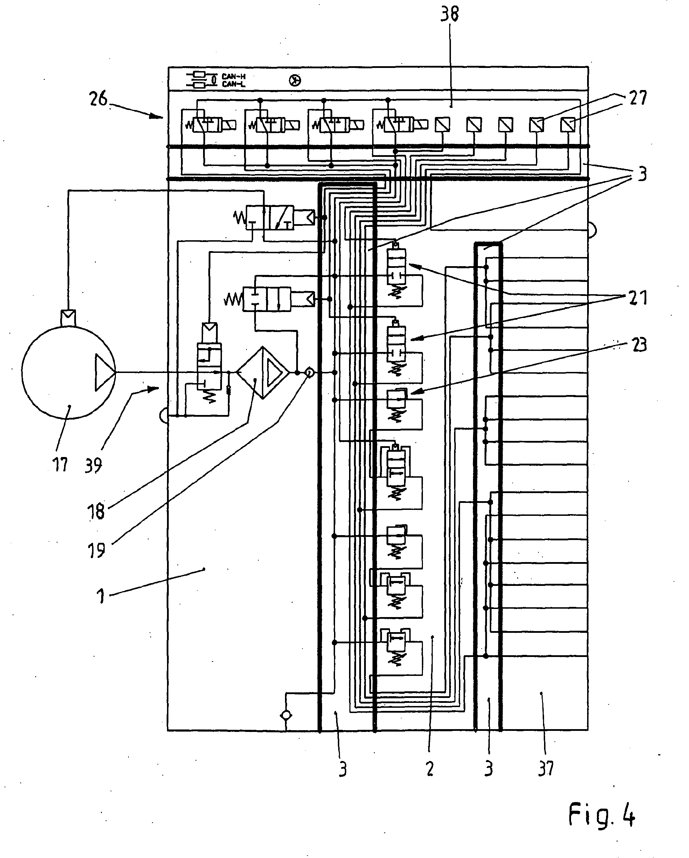

**Fig. 4** zeigt in schematischer Weise eine Druckluftbeschaffungseinheit, wie sie einem Kompressor 17 nachgeschaltet ist. Es ist hier ein Bauteil 1 dargestellt, welches einen Druckregler 39 und die Trocknungspatrone 18 sowie noch weitere Elemente aufnimmt. Weiterhin ist das Bauteil 2 erkennbar, wobei auch hier durch eine besondere Linienführung hervorgehoben die Verteilungsplatte 3 dazwischen geschaltet angeordnet ist. Weiterhin ist ein Bauteil 37 vorgesehen, welches im Wesentlichen die Anschlüsse aufnimmt, von denen Leitungen zu den Druckluftbehältern der verschiedenen Kreise geführt sind. Eine weitere Verteilungsplatte 3 ist hier zwischen den Flanschen der Bauteile 2 und 37 vorgesehen. Es ist erkennbar, dass die Luftverteilung über diese Verteilungsplatte 3 stattfindet.

Die Erfindung ist an dem in **Fig. 4** schematisch wiedergegebenen Ausführungsbeispiel ein drittes Mal verwirklicht. Es ist ein Bauteil 38 vorgesehen, welches eine Mehrzahl von Magnetventilen 26 und Druck-Spannungswandlern 27 enthält. Auch hier ist zwischen das Bauteil 2 und das Bauteil 38 eine Verteilungsplatte 3 eingeschaltet.

| BEZUGSZEICHENLISTE | | | | | | |
|---|---|---|---|---|---|---|
| 1 | | Bauteil | | 11 | | grabenartige Verbindungsleitung |
| 2 | | Bauteil | | 12 | | grabenartige Verbindungsleitung |
| 3 | | Verteilungsplatte | | 13 | | Leitungen |
| 4 | | Flansch | | 14 | | Bohrungen |
| 5 | | Oberfläche | | 15 | | Dichtungen |
| 6 | | Flansch | | 16 | | Dichtungen |
| 7 | | Oberfläche | | 17 | | Kompressor |
| 8 | | Oberfläche | | 18 | | Trocknungspatrone |
| 9 | | Oberfläche | | 19 | | Rückschlagventil |
| 10 | | grabenartige Verbindungsleitung | | 20 | | Leitung |
| | | | | | | |
| 21 | | Überströmventil | | 31 | | grabenartige Verbindungsleitung |
| 22 | | Verbindungsleitung | | 32 | | grabenartige Verbindungsleitung |
| 23 | | Druckbegrenzungsventil | | 33 | | grabenartige Verbindungsleitung |
| 24 | | Leitung | | 34 | | grabenartige Verbindungsleitung |
| 25 | | Anschluss | | 35 | | Löcher |
| 26 | | Magnetventil | | 36 | | Dichtungen |
| 27 | | Druck-Spannungswandler | | 37 | | Bauteil |
| 28 | | Regenerationsventil | | 38 | | Bauteil |
| 29 | | Oberfläche | | 39 | | Druckregler |
| 30 | | Oberfläche | | | | |

## Patentansprüche

1. Vorrichtung zum Verbinden zweier einander zugekehrter Flansche von Bauteilen (1, 2), insbesondere modular aufgebauter Bauteile, wobei in den Oberflächen (5, 7) der Flansche (4, 6) abgedichtete Leitungen (13) enden, mit einer mechanischen Spannvorrichtung für die Flansche (4, 6), **dadurch gekennzeichnet, dass** zwischen den einander zugekehrten Oberflächen (5, 7) der Flansche (4, 6) mindestens eine Verteilungsplatte (3) vorgesehen ist, die zwei jeweils den Oberflächen (5, 7) der Flansche (4, 6) zugekehrte Oberflächen (29, 30) aufweist, wobei die Verteilungsplatte (3) von mindestens einer Bohrung (14) durchsetzt ist, und dass zwischen den Oberflächen (5, 7) der Flansche (4, 6) und den Oberflächen (29, 30) der Verteilungsplatte (3) Dichtungen (15) angeordnet sind.

2. Vorrichtung nach Anspruch 1, **dadurch gekennzeichnet, dass** die Verteilungsplatte (3) in mindestens einer ihrer Oberflächen (29, 30) mindestens eine grabenartige Verbindungsleitung (31, 32, 33, 34) aufweist.

3. Vorrichtung nach Anspruch 1 oder 2, **dadurch gekennzeichnet, dass** zwischen der Oberfläche (29, 30) der Verteilungsplatte (3) und der zugehörigen Oberfläche (5, 7) der Flansche (4, 6) des Bauteils (1, 2) eine Dichtplatte aus elastischem Material vorgesehen ist, die Ausnehmungen für den Durchtritt von Druckluft aufweist.

4. Vorrichtung nach Anspruch 1 oder 2, **dadurch gekennzeichnet, dass** mindestens eine Oberfläche (29, 30) der Verteilungsplatte (3) mit einer durchbrochenen Beschichtung aus elastischem Material versehen ist.

5. Vorrichtung nach Anspruch 2 oder 3, **dadurch gekennzeichnet, dass** die Verteilungsplatte (3) von mehreren Bohrungen (14) durchsetzt ist, die zur Realisierung einer Leitung vorgesehen sind.

6. Vorrichtung nach mindestens einem der Ansprüche 1 bis 5, **dadurch gekennzeichnet, dass** in mindestens einer der Oberflächen (5, 7) der Flansche (4, 6) grabenartige Verbindungsleitungen (10, 11, 12) vorgesehen sind.

7. Vorrichtung nach mindestens einem der Ansprüche 1 bis 6, **dadurch gekennzeichnet, dass** der Querschnitt der grabenartigen Verbindungsleitungen (10, 11, 12, 31, 32, 33, 34) an die durchzuführende Luftmenge angepasst ist.

8. Vorrichtung nach mindestens einem der Ansprüche 1 bis 7, **dadurch gekennzeichnet, dass** eine Bohrung (14) durch die Verteilungsplatte (3) in mehreren grabenartigen Verbindungsleitungen endet und/oder beginnt.

9. Vorrichtung nach mindestens einem der Ansprüche 1 bis 8, **dadurch gekennzeichnet, dass** eine in der Oberfläche (5, 7) des Flansches (4, 6) des einen Bauteils (1, 2) endende Leitung über zwei die Verteilungsplatte (3) durchsetzende Bohrungen (14) rückgeführt ist.

10. Vorrichtung nach mindestens einem der Ansprüche 1 bis 9, **dadurch gekennzeichnet, dass** in mindestens einer Oberfläche (5, 7) der Verteilungsplatte (3) mindestens eine grabenartige Vertiefung zur Rückkehr in die gleiche Oberfläche (5, 7) des Flansches vorgesehen ist.
